# EUROPÄISCHE PATENTSCHRIFT

(11) **EP 1 315 263 B1**
(45) Veröffentlichungstag und Bekanntmachung des Hinweises auf die Patenterteilung: **09.11.2005**
(21) Anmeldenummer: 01128016.1
(22) Anmeldetag: 24.11.2001
(51) Int. Cl.: H02G 7/14

(54) **Schwingungsdämpfer**
Vibration damper
Amortisseur de vibration

(43) Veröffentlichungstag der Anmeldung: 28.05.2003
(73) Patentinhaber: Richard Bergner Elektroarmaturen GmbH & Co.KG, 91126 Schwabach (DE)
(72) Erfinder: Biedenbach, Gerhard, 91126 Schwabach (DE)
(74) Vertreter: Tergau & Pohl Patentanwälte

(56) Entgegenhaltungen:
- GB-A- 2 068 081
- US-A- 3 432 610
- US-A- 3 711 624
- US-A- 4 159 393
- US-A- 4 620 060

## Beschreibung

Die Erfindung betrifft einen Schwingungsdämpfer mit mehreren Eigenresonanzfrequenzen, insbesondere für ein Leiterseil einer elektrischen Freileitung, der eine Aufhängevorrichtung zur Befestigung am Leiterseil sowie ein sich geradlinig erstreckendes Dämpferelement, insbesondere ein Dämpferseil umfasst, das von der Aufhängevorrichtung gehalten ist und an dem jeweils beidseitig der Aufhängevorrichtung eine Dämpfermasse befestigt ist, von denen zumindest eine durch zumindest zwei voneinander beabstandete Gewichtselemente gebildet ist.

Ein derartiger Schwingungsdämpfer ist aus der GB 2 068 081 A zu entnehmen. Weitere Schwingungsdämpfer sind aus DE-B-1 303 538 sowie aus US 4,159,393 zu entnehmen. Der Schwingungsdämpfer dient allgemein dazu, die beispielsweise durch Wind hervorgerufenen Schwingungen des Leiterseils der Freileitung zu dämpfen, um die durch die Schwingungen bedingte hohe Beanspruchung der Aufhängepunkte der einzelnen Leiterseile gering zu halten. Der Schwingungsdämpfer wird an das jeweilige Leiterseil mit Hilfe der Aufhängevorrichtung befestigt. Das Dämpferelement, insbesondere das Dämpferseil, durchläuft die Aufhängevorrichtung vom Leiterseil beabstandet parallel zu diesem. Üblicherweise sind am Dämpferseil endseitig jeweils rohr- oder glockenförmige Dämpfermassen angeordnet, die träge Massen bilden. Eine Schwingung des Leiterseils wird auf das Dämpferelement mit den daran endseitig angeordneten trägen Massen übertragen, so dass insgesamt das Dämpferelement in Schwingungen versetzt wird. Das Dämpferelement ist zur Umwandlung der kinetischen Schwingungsenergie insbesondere in Wärmeenergie ausgebildet. Bei einem Dämpferseil wird dies dadurch erreicht, dass bei einer Schwingungsbewegung die einzelnen Seiladern gegeneinander reiben, so dass die kinetische Schwingungsenergie in Reibungsenergie, d.h. in Wärme umgesetzt wird.

Bei einer symmetrischen Ausgestaltung des Schwingungsdämpfers weist dieser lediglich zwei Eigenresonanzfrequenzen auf. Das bedeutet, dass lediglich bei diesen beiden Resonanzfrequenzen eine besonders gute Dämpfung erzielt wird. Ziel ist es, über ein möglichst breites Frequenzband ein möglichst gutes Dämpfverhalten einstellen zu können. Zumindest wird angestrebt, für bestimmte kritische Frequenzen oder Frequenzbereiche ein gutes Dämpfungsverhalten zu erzielen.

Zu diesem Zweck ist gemäß der DE-B 1 303 538 eine asymmetrische Verteilung der beiden Dämpfermassen vorgesehen. Dies wird durch eine unterschiedliche Ausformung der endseitig am Dämpferseil angeordneten glockenartigen Dämpfermassen erzielt. Ein derartiger asymmetrischer Schwingungsdämpfer weist insgesamt vier Eigenresonanzfrequenzen auf, wobei - je nach Ausgestaltung der Dämpfermassen - zwischen zwei benachbarten Eigenresonanzfrequenzen sich ein Resonanzbereich einstellen lässt. Jedoch ist hierzu sowohl eine aufwändige Berechnung für die Formgebung der Dämpfermassen als auch eine sehr hohe Maßgenauigkeit bei der Herstellung an die zuvor rechnerisch ermittelte Formgebung erforderlich.

Der Erfindung liegt die Aufgabe zugrunde, einen einfach ausgebildeten Schwingungsdämpfer mit mehreren Eigenresonanzfrequenzen anzugeben.

Die Aufgabe wird gemäß der Erfindung gelöst durch einen Schwingungsdämpfer mit den Merkmalen des Patentanspruchs 1. Bei diesem ist eine Aufhängevorrichtung sowie ein Dämpferelement, insbesondere ein Dämpferseil, vorgesehen, das von der Aufhängevorrichtung gehalten ist und an dem jeweils beidseitig der Aufhängevorrichtung eine Dämpfermasse befestigt ist. Zur Festlegung der mehreren Eigenresonanzfrequenzen ist zumindest eine der Dämpfermassen durch zumindest zwei voneinander beabstandete Gewichtselemente gebildet, die auf das Dämpferelement aufgeklemmt oder aufgegossen sind

Dieser Ausgestaltung liegt die Idee zugrunde, die herkömmlich einteilige Dämpfermasse zwei- oder mehrteilig auszubilden, so dass die Gewichtselemente an beliebigen Positionen am Dämpferseil verteilt angeordnet werden können. Jedem dieser einzelnen Gewichtselemente, die als Teildämpfermassen wirken, ist eine eigene Resonanzfrequenz zugeordnet, die im Wesentlichen von der Position des Gewichtselements, von der Masse des Gewichtselements und von der Form des Gewichtselements abhängig ist. Der wesentliche Vorteil der Ausgestaltung mit den getrennt voneinander positionierten Gewichtselementen ist in der leichten Einstellung der gewünschten Resonanzfrequenzen zu sehen. Hierzu sind keine aufwändigen Rechenoperationen und auch keine aufwändigen Formgebungsverfahren notwendig. Vielmehr können als Gewichtselemente einfachste geometrische Formen verwendet werden. Die Einstellung der gewünschten Eigenresonanzfrequenzen erfolgt beispielsweise auf einem Mess- oder Prüfstand derart, dass die einzelnen Gewichtselemente auf dem Dämpferseil so lange verschoben werden, bis sich die gewünschten Eigenresonanzfrequenzen einstellen.

Zweckdienlicherweise sind beidseitig der Aufhängevorrichtung jeweils zumindest zwei oder mehr Gewichtselemente angeordnet, um möglichst viele Resonanzfrequenzen zu erhalten, so dass ein möglichst breitbandiges Dämpfungsverhalten erreicht wird.

Zweckdienlicherweise wird eine bezüglich der Aufhängevorrichtung asymmetrische Verteilung der Massen der Gewichtselemente eingestellt. Die Asymmetrie kann dabei bedingt sein durch unterschiedliche Positionen auf dem Dämpferseil, durch unterschiedlich große Massen oder durch unterschiedliche Formgebungen der Gewichtselemente. Aufgrund der asymmetrischen Ausgestaltung ist gewährleistet, dass tatsächlich jedem der Gewichtselemente eine eigene Resonanzfrequenz zugeordnet ist, die unabhängig von den anderen Resonanzfrequenzen ist.

Für eine einfache Montage der Gewichtselemente am Dämpferseil sind die Gewichtselemente hülsenartig ausgebildet. Dies ermöglicht ein einfaches Aufschieben der Gewichtselemente auf das Dämpferseil. Die Gewichtselemente weisen also beispielsweise eine durchgehende Bohrung auf, durch die das Dämpferseil geführt ist. Es besteht natürlich auch die Möglichkeit, endseitig am Dämpferseil die bisher üblichen rohr- oder glockenartigen Dämpfermassen zusätzlich anzuordnen. Alternativ zu der hülsenartigen Ausgestaltung können die Gewichtselemente auch direkt auf das Dämpferseil aufgegossen werden. Bevorzugt wird dabei bei einem gemeinsamen Gießvorgang zugleich auch die Aufhängevorrichtung aufgegossen.

Gemäß einer bevorzugten Weiterbildung sind die hülsenartig ausgebildeten Gewichtselemente geteilt. Die Teilung kann vollständig sein, so dass das Gewichtselement in zwei Teilhälften unterteilt ist. Es kann alternativ auch nur eine teilweise Teilung vorgesehen sein, so dass beispielsweise zwei Teilstücke des Gewichtselements über eine Art Filmscharnier miteinander verbunden sind, oder dass das Gewichtselement lediglich einen seitlichen Schlitz aufweist. Alle diese Ausgestaltungen ermöglichen es, das Gewichtselement seitlich, also quer zu dessen Längsrichtung, auf das Dämpferseil aufzuschieben, anzuklipsen, oder an dieses anzuhängen. Ein geteiltes Gewichtselement eignet sich insbesondere auch zur nachträglichen Befestigung an herkömmliche Schwingungsdämpfer mit beidendseitig am Dämpferseil angeordneten glockenförmigen Dämpfermassen. Die beiden Teilhälften können auch miteinander verschraubt werden.

Vorzugsweise sind die Gewichtselemente auf das Dämpferelement aufgeklemmt, beispielsweise aufgequetscht oder aufgepresst. Dies erlaubt eine besonders einfache, schnelle und auch sichere Befestigung des jeweiligen Gewichtselements am Dämpferseil. Das Gewichtselement wird hierbei zunächst entweder in Längsrichtung oder von der Seite auf das Dämpferseil aufgeschoben und anschließend wird der hülsenartige Bereich des Gewichtselements verquetscht, so dass eine kraftschlüssige Verbindung mit dem Dämpferseil erzeugt wird.

Zweckdienlicherweise liegt der Schwerpunkt der jeweiligen, von den Gewichtselementen gebildeten Dämpfermassen beidseitig der Aufhängevorrichtung in einer von dem Dämpferelement und von der Aufhängevorrichtung aufgespannten Ebene. Da das Dämpferseil im montierten Zustand parallel zu dem Leiterseil der Freileitung verläuft, ist diese Ebene identisch mit der vom Leiterseil und vom Dämpferseil aufgespannten Ebene. Durch diese Maßnahme wird sichergestellt, dass der Schwingungsdämpfer keine unerwünschte Dreh- oder Torsionsbewegung vollzieht. Insbesondere bei einer Ausgestaltung, bei der die beiden Dämpfermassen beidseitig der Aufhängevorrichtung in einander entgegengesetzten Richtungen aus der Ebene hervorstehen, würde das Dämpferseil bei einer Schwingung eine Torsionsbewegung um seine Längsachse ausführen. Eine Torsionsbewegung führt jedoch dazu, dass das Dämpferseil wechselweise verdrillt und aufgedrillt wird. Dadurch variieren in unerwünschter Weise die Dämpfungseigenschaften, also die Fähigkeit, die kinetische Energie in Reibungsenergie umzusetzen.

Gemäß einer weiteren bevorzugten Ausgestaltung weist das Dämpferseil beidseitig zur Aufhängevorrichtung zwei frei schwingbare Seilenden auf. Das Dämpferseil ist also nur an der Aufhängevorrichtung befestigt und nicht mit einem weiteren Dämpferseil eines weiteren Schwingungsdämpfers gekoppelt. Dadurch bleiben dem Dämpferseil möglichst viele Schwingungs-Freiheitsgrade erhalten, so dass ein möglichst breitbandiges Dämpfungsverhalten erzielt werden kann.

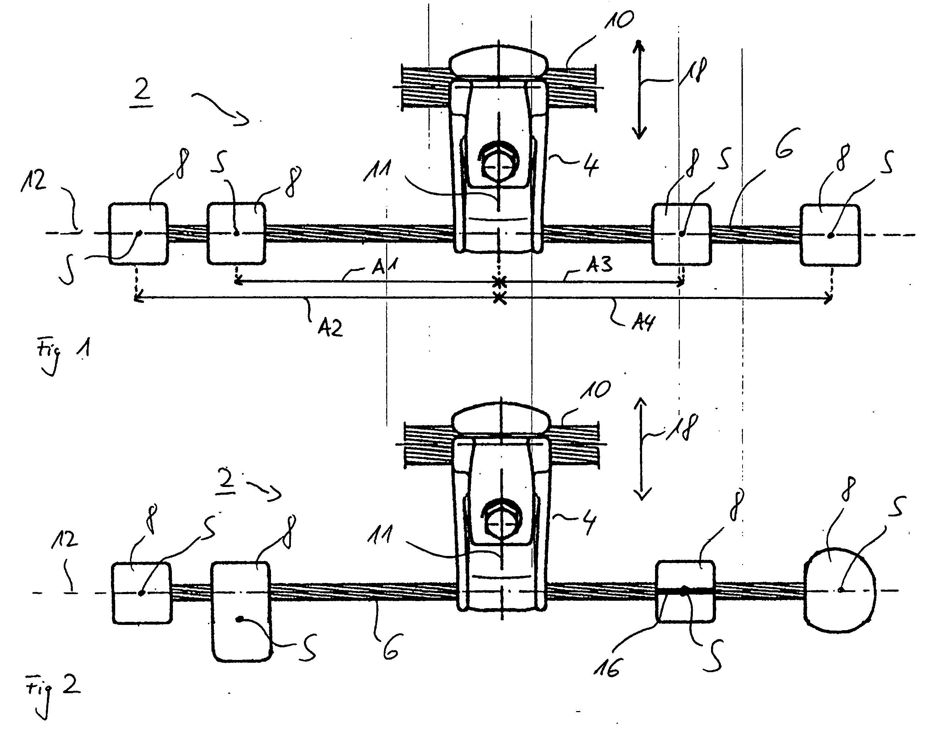

Ausführungsbeispiele der Erfindung werden im Folgenden anhand der Zeichnung näher erläutert. Die Fig. 1 und 2 zeigen jeweils in schematischen Darstellungen Schwingungsdämpfer in unterschiedlichen Ausführungsformen.

Gemäß den beiden Figuren umfasst ein Schwingungsdämpfer 2 jeweils eine Aufhängevorrichtung 4, ein als Dämpferseil 6 ausgebildetes Dämpferelement sowie beidseitig der Aufhängevorrichtung 4 jeweils zwei am Dämpferseil 6 befestigte Gewichtselemente 8. Die auf einer Seite der Aufhängevorrichtung 4 am Dämpferseil 6 befestigten Gewichtselemente 8 bilden jeweils eine Dämpfermasse. Jedes der Gewichtselemente 8 kann daher als Teildämpfermasse angesehen werden. Der ganze Schwingungsdämpfer 2 ist mittels der Aufhängevorrichtung 4 an einem Leiterseil 10 einer nicht weiter dargestellten elektrischen Freileitung angehängt. Hierzu ist die Aufhängevorrichtung 4 als eine Kabelklemme ausgeführt. Die Aufhängevorrichtung 4 weist im Bereich des Leiterseils 10 eine Klemmstelle für das Leiterseil 12 und an ihrem gegenüberliegenden Ende eine weitere Befestigungs- oder Klemmstelle für das Dämpferseil 6 auf, das durch die Aufhängevorrichtung 4 hindurchgeführt ist.

Das Dämpferseil 6 erstreckt sich quer zu einer Längsachse 11 der Aufhängevorrichtung 4 und parallel zu dem Leiterseil 10. Das gesamte Dämpferseil 6 erstreckt sich knickfrei und - abgesehen von einer eventuellen massebedingten Durchbiegung - geradlinig entlang seiner Längsachse 12 und ist einteilig ausgebildet. Daneben besteht auch die Möglichkeit, das Dämpferseil 6 mehrteilig auszubilden und die unterschiedlichen Teilbereiche beispielsweise über einzelne Gewichtselemente 8, die dann in diesem Fall als Verbindungsklemmen ausgebildet sind, miteinander zu verbinden.

Vom Leiterseil 10 und dem Dämpferseil 6 ist eine Ebene aufgespannt, die der Papierebene entspricht. Die jeweiligen Schwerpunkte S der einzelnen Gewichtselemente liegen jeweils innerhalb dieser Ebene. Bis auf das innen liegende Gewichtselement auf der linken Dämpferseilhälfte der Fig. 2, bei dem der Schwerpunkt S unterhalb des Dämpferseils 6 liegt, liegen alle Schwerpunkte S zugleich innerhalb des Dämpferseils 6 auf dessen Längsachse 11. Durch diese Anordnung der Schwerpunkte is eine Drehschwingung des Schwingungsdämpfers 2 um die Längsachse 14 der Aufhängevorrichtung 4 und/oder eine Torsionsschwingung um die Längsachse 12 des Dämpferseils 6 vermieden. Diese Dreh- bzw. Torsionsschwingung tritt auch dann nicht auf, wenn zumindest der Schwerpunkt der auf einer Dämpferseite 6 von den beiden Gewichtselementen 8 gebildeten Dämpfermasse in dieser durch das Dämpferseil 6 und das Leiterseil 10 aufgespannten Ebene liegt.

Die einzelnen Gewichtselemente 8 sind am Dämpferseil 6 an unterschiedlichen Längenpositionen befestigt, und zwar sind die unterschiedlichen Gewichtselemente von der Längsachse 11 der Aufhängevorrichtung um unterschiedliche Abstände A1-A4 beabstandet.

Im Ausführungsbeispiel der Fig. 1 sind die einzelnen Gewichtselemente 8 identisch ausgebildet und weisen eine zylindersymmetrische Form auf. Sie sind nach Art einer zylindrischen Hülse ausgebildet, durch die jeweils das Dämpferseil 6 hindurchgeleitet wird. Befestigt sind die Gewichtselemente 8 durch Aufquetschen auf dem Dämpferseil 6.

Alternativ hierzu sind gemäß dem Ausführungsbeispiel 4 am Dämpferseil 6 unterschiedlich geformte Gewichtselemente 8 mit unterschiedlichen Teildämpfermassen befestigt. Neben der zylindrischen Ausgestaltung sind beispielhaft eine kugelsymmetrische sowie eine langgestreckte, vom Dämpferseil 6 herunterhängende Form dargestellt. Insgesamt zeichnen sich die Gewichtselemente 8 durch eine sehr einfache geometrische Form aus und lassen sich sehr einfach herstellen. Während die inneren Gewichtselemente 8 jeweils mit einer durchgehenden Bohrung für das Dämpferseil 6 versehen sind, können die äußeren Gewichtselemente 8, die jeweils endseitig an den beiden Seilenden des Dämpferseils 6 angebracht sind, stirnseitig geschlossen nach Art einer Haube oder Glocke ausgebildet sein.

Als weitere Variante ist das innere Gewichtselement 8 auf dem rechten Dämpferseilteilstück als eine Hülse mit Schlitz 16 ausgebildet es, ist also geteilt. Im Querschnitt gesehen ist das Gewichtselement 8 beispielsweise nach Art eines C ausgebildet und wird bei der Montage seitlich auf das Dämpferseil 6 aufgesteckt. Anschließend wird das Gewichtselement 8 zur sicheren Befestigung am Dämpferseil verquetscht. Alternativ zu dieser C-förmigen Ausgestaltung kann das Gewichtselement 8 auch in zwei voneinander trennbare Teilhälften geteilt oder nach Art einer Rohrschelle ausgebildet sein.

Der wesentliche Vorteil des Schwingungsdämpfers liegt in der Aufteilung der beidseitig der Aufhängevorrichtung 4 jeweils angeordneten Dämpfermasse in mehrere voneinander getrennte und unabhängige Gewichtselemente 8. Insbesondere bei der in den Ausführungsbeispielen dargestellten asymmetrischen Verteilung der Massen der Gewichtselemente 8 ist jedem der Gewichtselemente 8 eine spezielle Eigenresonanzfrequenz des Schwingungsdämpfers 2 zugeordnet. Diese Eigenresonanzfrequenzen lassen sich empirisch, beispielsweise auf einem Versuchsstand, leicht einstellen, indem die einzelnen Gewichtselemente 8 an unterschiedlichen Längenpositionen befestigt werden und/oder dass unterschiedlich schwere oder unterschiedlich geformte Gewichtselemente 8 vorgesehen sind. Dadurch besteht die Möglichkeit, durch vergleichsweise einfache Maßnahmen gewünschte Eigenresonanzfrequenzen und insbesondere gewünschte Eigenresonanzfrequenzbänder einzustellen, um ein möglichst breitbandiges Dämpfungsverhalten des Schwingungsdämpfers 2 insgesamt zu erzielen. Für ein möglichst breitbandiges Dämpfungsverhalten können dabei auch mehr als die dargestellten Gewichtselemente 8 am Dämpferseil 6 befestigt werden.

Bei einer beispielsweise durch Wind verursachten Schwingung des Leiterseils 10 bewegt sich dieses entlang der Pfeilrichtung 18 auf und ab. Dadurch wird über die Aufhängevorrichtung 4 auch das Dämpferseil 6 in eine Schwingungsbewegung versetzt. Diese Schwingungsbewegung ist insbesondere im Bereich der Resonanzfrequenzen oder der Resonanzfrequenzbänder besonders ausgeprägt. Die Schwingungsbewegung des Dämpferseils 6 führt dazu, dass die einzelnen Seiladem des Dämpferseils 6 relativ zueinander verschoben werden und gegeneinander reiben, so dass die kinetische Schwingungsenergie in Relbungs- und Wärmeenergie umgewandelt wird, so dass die Schwingung des Leiterseils 10 insgesamt gedämpft wird.

Der Schwingungsdämpfer 2 kann allgemein zur Schwingungsdämpfung von Seilen verwendet werden. Insbesondere kann er auch bei Abspannseilen oder Tragseilen eingesetzt werden, wie sie beispielsweise zum Abspannen bzw. Tragen von Sendemasten bzw. Hängebrücken verwendet werden.

### Bezugszeichenliste

- 2: Schwingungsdämpfer
- 4: Aufhängevorrichtung
- 6: Dämpferseil
- 8: Gewichtselement
- 10: Leiterseil
- 11: Längsachse der Aufhängevorrichtung
- 12: Längsachse des Dämpferseils
- 16: Schlitz
- 18: Pfeilrichtung

- S: Schwerpunkt
- A1-A4: Abstand

## Patentansprüche

1. Schwingungsdämpfer (2) mit mehreren Eigenresonanzfrequenzen, insbesondere für ein Leiterseil (10) einer elektrischen Freileitung, der eine Aufhängevorrichtung (4) zur Befestigung am Leiterseil (10) sowie ein von der Aufhängevorrichtung (4) gehaltenes und sich geradlinig erstreckendes Dämpferelement, insbesondere ein Dämpferseil (6) umfasst, an dem jeweils beidseitig der Aufhängevorrichtung (4) eine Dämpfermasse befestigt ist, von denen zumindest eine durch zumindest zwei voneinander beabstandete Gewichtselemente (8) gebildet ist,
**dadurch gekennzeichnet,**
**dass** die Gewichtselemente aufdas Dämpferelement (6) aufgeklemmt oder aufgegossen sind.

2. Schwingungsdämpfer (2) nach Anspruch 1,
**dadurch gekennzeichnet,**
**dass** beidseitig der Aufhängevorrichtung (4) jeweils zumindest zwei Gewichtselemente (8) angeordnet sind.

3. Schwingungsdämpfer (2) nach Anspruch 1 oder 2,
**gekennzeichnet durch**
eine bezüglich der Aufhängevorrichtung (4) asymmetrische Verteilung der Massen der Gewichtselemente (8).

4. Schwingungsdämpfer (2) nach einem der vorhergehenden Ansprüche,
**dadurch gekennzeichnet,**
**dass** Gewichtselemente (8) mit unterschiedlichen Massen vorgesehen sind.

5. Schwingungsdämpfer (2) nach einem der vorhergehenden Ansprüche,
**dadurch gekennzeichnet,**
**dass** Gewichtselemente (8) mit unterschiedlicher Geometrie vorgesehen sind.

6. Schwingungsdämpfer (2) nach einem der vorhergehenden Ansprüche,
**dadurch gekennzeichnet,**
**dass** zumindest ein Teil der Gewichtselemente (8) hülsenartig zum Umfassen des Dämpferelements (6) ausgebildet sind.

7. Schwingungsdämpfer (2) nach Anspruch 6,
**dadurch gekennzeichnet,**
**dass** die hülsenartig ausgebildeten Gewichtselemente (8) geteilt sind.

8. Schwingungsdämpfer (2) nach einem der vorhergehenden Ansprüche,
**dadurch gekennzeichnet,**
**dass** der Schwerpunkt (S) der Dämpfermassen in einer vom Dämpferelement (6) und der Aufhängevorrichtung (6) aufgespannten Ebene liegt.

9. Schwingungsdämpfer (2) nach einem der vorhergehenden Ansprüche,
**dadurch gekennzeichnet,**
**dass** das Dämpferelement (6) beidseitig zur Aufhängevorrichtung (4) zwei frei schwingbare Enden umfasst.

## Claims

1. Vibration damper (2) having two or more resonant natural frequencies, in particular for a conductor cable (10) of an electrical overhead line, which has a suspension apparatus (4) for attachment to the conductor cable (10) as well as a damper element, in particular a damper cable (6), which is held by the suspension apparatus (4) and extends in a straight line, and to which a damper mass is attached on each of the two sides of the suspension apparatus (4) at least one of which damper masses is formed by at least two weight elements (8) that are separated from one another,
**characterized in that**
the weight elements are clamped or cast onto the damper element (6).

2. Vibration damper (2) according to Claim 1,
**characterized in that**
at least two weight elements (8) are arranged on each of the two sides of the suspension apparatus (4).

3. Vibration damper (2) according to claim 1 or 2,
**characterized by**
the masses of the weight elements (8) being distributed asymmetrically with respect to the suspension apparatus (4).

4. Vibration damper (2) according to one of the preceding claims,
**characterized in that**
weight elements (8) with different masses are provided.

5. Vibration damper (2) according to one of the preceding claims,
**characterized in that**
weight elements (8) with different geometries are provided.

6. Vibration damper (2) according to one of the preceding claims,
**characterized in that**
at least some of the weight elements (8) are in the form of sleeves in order to surround the damper element (6).

7. Vibration damper (2) according to Claim 6,
**characterized in that**
the sleeve-like weight elements 8 are split.

8. Vibration damper (2) according to one of the preceding claims,
**characterized in that**
the centre of gravity (S) of the damper masses lies on a plane which is covered by the damper element (6) and the suspension apparatus (6).

9. Vibration damper (2) according to one of the preceding claims,
**characterized in that**
the damper element (6) has two ends which can oscillate freely on both sides of the suspension apparatus (4).

## Revendications

1. Amortisseur de vibrations (2) avec plusieurs fréquences de résonance propre, en particulier pour un câble conducteur (10) d'une ligne électrique aérienne, comprenant un dispositif de suspension (4) à fixer au câble conducteur (10), ainsi qu'un élément amortisseur, en particulier un câble amortisseur (6), maintenu par le dispositif de suspension (4) et s'étendant en ligne droite, câble amortisseur auquel une masse amortissante est fixée respectivement des deux côtés du dispositif de suspension (4), dont au moins l'une est formée par au moins deux éléments de contrepoids (8) espacés l'un de l'autre,
**caractérisé en ce que** les éléments de contrepoids sont sertis ou moulés sur l'élément amortisseur (6).

2. Amortisseur de vibrations (2) selon la revendication 1, **caractérisé en ce que** des deux côtés du dispositif de suspension (4), respectivement au moins deux éléments de contrepoids (8) sont disposés.

3. Amortisseur de vibrations (2) selon la revendication 1 ou 2, **caractérisé par** une répartition des masses des éléments de contrepoids (8) qui est asymétrique par rapport au dispositif de suspension (4).

4. Amortisseur de vibrations (2) selon l'une quelconque des revendications précédentes, **caractérisé en ce que** des éléments de contrepoids (8) avec différentes masses sont prévus.

5. Amortisseur de vibrations (2) selon l'une quelconque des revendications précédentes, **caractérisé en ce que** des éléments de contrepoids (8) de géométrie variable sont prévus.

6. Amortisseur de vibrations (2) selon l'une quelconque des revendications précédentes, **caractérisé en ce qu'**au moins une partie des éléments de contrepoids (8) est réalisée à la manière d'une douille pour entourer l'élément amortisseur (6).

7. Amortisseur de vibrations (2) selon la revendication 6, **caractérisé en ce que** les éléments de contrepoids (8) réalisés à la manière d'une douille sont divisés.

8. Amortisseur de vibrations (2) selon l'une quelconque des revendications précédentes, **caractérisé en ce que** le centre de gravité (S) des masses amortissantes se trouve dans un plan fixé par l'élément amortisseur (6) et le dispositif de suspension (4).

9. Amortisseur de vibrations (2) selon l'une quelconque des revendications précédentes, **caractérisé en ce que** l'élément amortisseur (6) comprend des deux côtés du dispositif de suspension (4) deux extrémités pouvant osciller librement.
